# EUROPÄISCHE PATENTSCHRIFT

(11) **EP 0 468 152 B1**
(45) Veröffentlichungstag und Bekanntmachung des Hinweises auf die Patenterteilung: **27.07.1994**
(21) Anmeldenummer: 91107553.9
(22) Anmeldetag: 09.05.1991
(51) Int. Cl.: F16H 59/54, F16H 61/18, F16H 61/22, B60K 41/26, B60K 20/00

(54) **Anordnung an einem Bremspedal zur Ver- und Entriegelung eines Hebels einer Schaltvorrichtung eines Wechselgetriebes eines Kraftfahrzeuges**
Brake pedal arrangement for locking/unlocking a lever of a vehicle gear shifting device
Dispositif sur une pédale de frein pour bloquer et débloquer le levier du dispositif de changement de vitesse dans une transmission de véhicule

(30) Priorität: 27.07.1990 DE 4023876
(43) Veröffentlichungstag der Anmeldung: 29.01.1992
(73) Patentinhaber: MERCEDES-BENZ AG, 70327 Stuttgart (DE)
(72) Erfinder: Papenhagen, Dieter, W-7050 Waiblingen (DE); Kosik, Franz, W-7302 Ostfildern 4 (DE); Müller, Martin, W-7300 Esslingen (DE)

(56) Entgegenhaltungen:
- DE-A- 3 419 168
- DE-C- 3 842 333
- FR-A- 2 467 100
- US-A- 4 096 930
- US-A- 4 421 214
- US-A- 4 572 340

## Beschreibung

Die Erfindung bezieht sich auf eine Anordnung nach dem Oberbegriff von Patentanspruch 1.

Bei einer bekannten Anordnung dieser Art (US-A- 45 72 340) arbeitet das Bremspedal über ein an die Bremshydraulik angeschlossenes hydrostatisches Gestänge zusammen mit der Verriegelungsfeder auf den einen Hebelarm des zweiarmig ausgebildeten Stellhebels, dessen anderer Hebelarm korrespondierende Ausnehmungen für die jeweilige Verriegelung der drei Stellungen eines Riegels aufweist, welcher starr an einem Schalthebel einer Schaltvorrichtung eines in eine Neutralstellung und jeweils eine weitere Stellung für Vorwärts- und Rückwärtsfahrt schaltbaren Getriebes angeordnet ist, so daß diese Verriegelungsvorrichtung bei jeder Getriebeschaltung durch das Bremspedal entriegelt werden muß. Infolge der ständigen hydraulischen Ankoppelung des Stellhebels an das Bremspedal ergibt sich ein störender Einfluß durch die Verriegelungsfeder, wenn relativ niedrige fein dosierte Bremskräfte eingesteuert werden sollen.

Die der Erfindung zugrunde liegende Aufgabe besteht in wesentlichen darin, bei einer gattungsgemäßen Anordnung hydraulische Mittel zur Verriegelung des Hebels der Schaltvorrichtung, insbesondere des Handwählhebels einer selbsttätigen Schaltvorrichtung aus Sicherheitsgründen zu vermeiden und unerwünschte Einflüsse der Verriegelungsfeder bei der Einsteuerung von niedrigen Bremskräften gering zu halten bzw. zu verhindern.

Die erläuterte Aufgabe ist in vorteilhafter Weise mit den kennzeichnenden Merkmalen von Patentanspruch 1 gelöst.

Die erfindungsgemäße Anordnung eignet sich besonders für solche Verriegelungsvorrichtungen, bei denen der Hebel der Schaltvorrichtung nur in einer - bei einem Handwählhebel also in der P-Stellung - blockierbar und in den übrigen Stellungen eine Nockensteuerung der Verriegelungsvorrichtung am Stellhebel wirksam ist, welche die Verriegelungsfeder an sich unter Spannung hält - durch die Erfindung in ihrem Einfluß auf das Bremspedal auch in dem angesprochenen engen Schwenkwinkelbereich abgeschaltet ist. Bei Anwendung der Erfindung auf derartige Anordnungen - bspw. nach dem deutschen Patent DE-C- 38 42 333 - ist dann die Federabstimmung zwischen den drei zur Anwendung kommenden Federn nach den Patentansprüchen 2 und 3 getroffen.

Die Anordnung nach der Erfindung ist in vorteilhafter Weise mit der Ausgestaltung nach Patentanspruch 4 spielfrei gehalten.

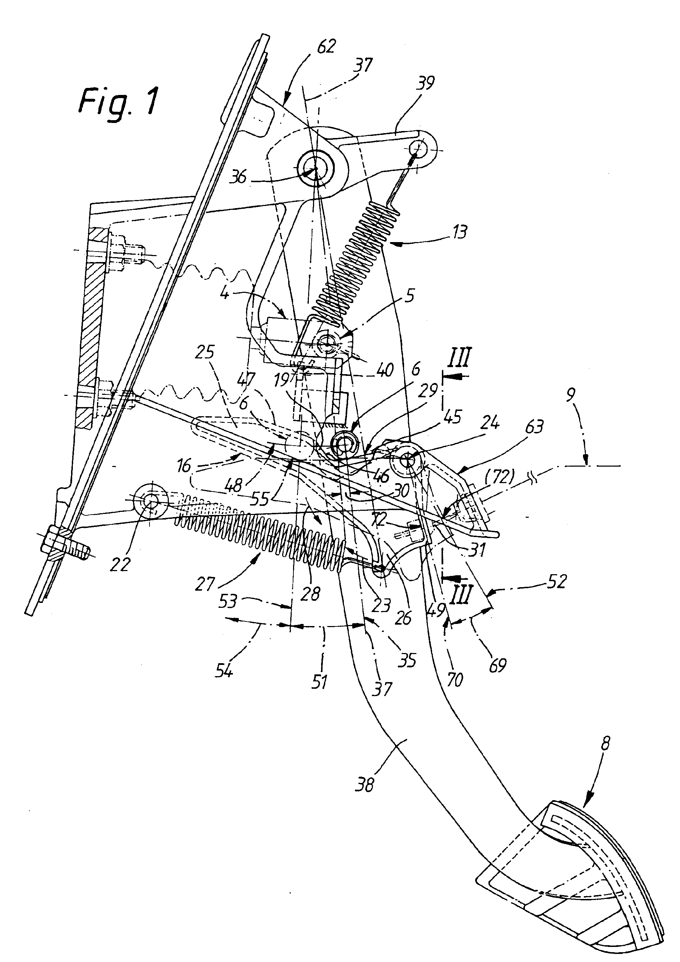

Einzelheiten der Erfindung ergeben sich aus der nachstehenden Beschreibung eines in der Zeichnung schematisch dargestellten Ausführungsbeispieles. In der Zeichnung bedeuten
- Figur 1: eine schematische Darstellung eines Bremspedales eines Kraftfahrzeuges mit einer Anordnung nach der Erfindung zum Ent- und Verriegeln eines Wählhebels einer selbsttätigen Schaltvorrichtung eines Gangwechselgetriebes,

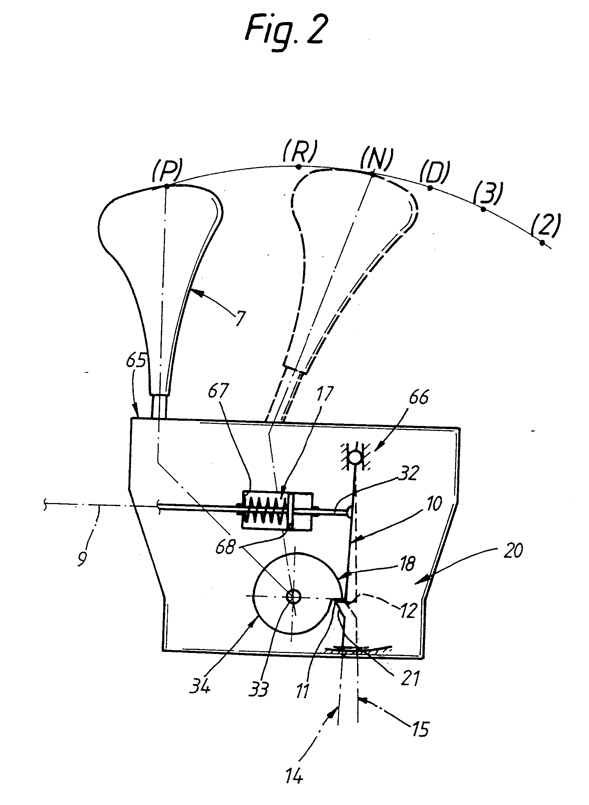

- Figur 2: eine schematische Darstellung einer durch die Anordnung nach der Erfindung von Figur 1 betätigbaren Verriegelungsvorrichtung nach Patent 38 42 333, und

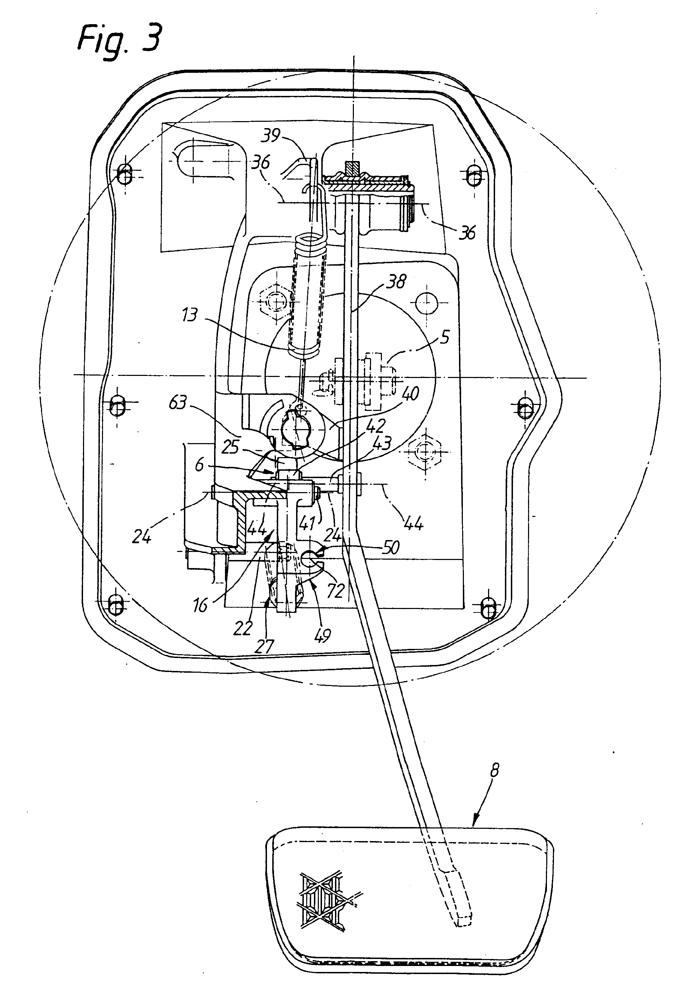

- Figur 3: einen Schnitt durch die Anordnung von Figur 1 nach Linie III-III.

An einer im Fußraum vor dem Fahrersitz in einem Kraftfahrzeug in der üblichen Weise bewegungsfest installierten Konsole 62 ist ein Bremspedal 8 mit seinem Pedalhebel 38 um eine geometrische Schwenkachse 36-36 schwenkbar gelagert. In den Ösen je einer Befestigungslasche 39 bzw. 40 der Konsole 62 bzw. des Pedalhebels 38 ist eine Rückholfeder 13 in Form einer auf Zug beanspruchten zylindrischen Schraubenfeder eingehängt, welche das Bremspedal 8 in Richtung seiner gezeichneten Ruhestellung 35 betätigt.

In dem zwischen seiner Schwenkachse 36-36 und seiner Befestigungslasche 40 liegenden Bereich ist der Pedalhebel 38 durch ein einachsiges Gelenk 5 mit dem üblichen zu einem Hauptbrems-Zylinder der Betriebsbremsen des Kraftfahrzeuges führenden Bremsgestänge 4 verbunden, welches somit beim Niedertreten des Bremspedales 8 betätigt wird.

An einem in Nähe des Pedalhebels 38 liegenden Konsolenteil 63 der Lagerkonsole 62 ist ein Lagerbolzen 41 koaxial zu einer zur Schwenkachse 36-36 des Bremspedales 8 parallelen Schwenkachse 24-24 feststehend gehaltert, auf welchem ein zweiarmiger Stellhebel 16 zur Betätigung einer an einem Handwählhebel 7 einer selbsttätigen Schaltvorrichtung eines Gangwechselgetriebes vorgesehenen Verriegelungsvorrichtung 20 schwenkbar gelagert ist. An dem einen Hebelarm 25 des Stellhebels 16 ist ein Betätigungsglied 19 in Form eines Nockens mit einer Eingriffsfläche 29 ausgebildet, welche unmittelbar mit einem Betätigungsglied 6 am Pedalhebel 38 in weiter unten erläuterter Weise zusammenarbeitet. Das Betätigungsglied 6 weist einen unmittelbar an der Eingriffsfläche 29 zur Anlage bringbaren Rollnocken 42 auf, welcher auf einem mit seiner Achse 44-44 parallel zu den Schwenkachsen 24-24 und 36-36 am Pedalhebel 38 feststehend gehalterten Lagerzapfen 43 drehbar gelagert ist. Die Eingriffsfläche 29 setzt sich im wesentlichen aus einem näher zur Schwenkachse 24-24 liegenden radial inneren Abschnitt 45, aus einem sich anschließenden mittleren Abschnitt 46 sowie aus einem sich anschließenden radial äußeren Abschnitt 47 zusammen.

Beim Niedertreten des Bremspedales 8 aus der Ruhestellung 35 heraus gelangt der Rollnocken 42 - wenn das Bremspedal 8 einen begrenzten kleinen Schwenkwinkelbereich 30 durchlaufen hat - mit dem mittleren Abschnitt 46 der Eingriffsfläche 29 in Eingriff, welcher quer zur Kreisbahn 48 des Rollnockens 42 verläuft, so daß der Stellhebel 16 in dem im Sinne einer Entriegelung in bezug auf die Verriegelungsvorrichtung 20 wirkenden Schwenksinn 28 betätigt wird.

Eine auf Zug beanspruchte Verriegelungsfeder 27 in Form einer zylindrischen Schraubenfeder ist mit ihrem einen Federende an einem feststehend an der Lagerkonsole 62 gehalterten Ankerbolzen 22 eingehängt. Das andere Federende der Verriegelungsfeder 27 ist in eine Öse des anderen Hebelarmes 26 des Stellhebels 16 eingehängt, wobei der Ankerbolzen 22 und die Öse des Hebelarmes 26 so zur Schwenkachse 24-24 orientiert sind, daß die Verriegelungsfeder 27 den Stellhebel 16 in dem im Sinne einer Verriegelung in bezug auf die Verriegelungsvorrichtung 20 wirkenden anderen Schwenksinn 23 betätigt.

In seinem zwischen der Öse für die Verriegelungsfeder 27 und der Schwenkachse 24-24 liegenden Bereich ist der Hebelarm 26 des Stellhebels 16 mit einer Befestigungslasche 49 einteilig ausgebildet, welche eine Aufnahme 50 in Form einer geschlitzten Öffnung aufweist, mittels der das eine Gestängeende 31 eines Stellgestänges 9 in Form eines Seilzuges am Hebelarm 26 angelenkt ist, wobei der Anlenkpunkt die Bezugszahl 72 trägt.

Das zu der Verriegelungsvorrichtung 20 führende Stellgestänge 9 ist mit seinem diesbezüglichen anderen Gestängeende 32 an einem Riegelelement 10 angelenkt, welches zwischen einer Verriegelungsstellung 14 und einer Freigangstellung 15 schwenkbar mittels eines Gelenkes 66 in Nähe der Schwenkachse 33 des Handwählhebels 7 angeordnet ist. Der Handwählhebel 7 ist nach Art einer Mittelschaltung am Getriebetunnel 65 des Kraftfahrzeuges seitlich zum Fahrersitz angeordnet und fest mit einem um die Schwenkachse 33 drehbaren Nockenscheibenteil 34 verbunden. Ein Sperrnocken 11 des Nockenscheibenteiles 34 und ein Gegensperrnocken 12 des Riegelelementes 10 stehen in der (P)-Stellung des Handwählhebels 7 - wenn sich das Bremspedal 8 in seiner Ruhestellung 35 befindet - so miteinander in Eingriff, daß eine Betätigung des Handwählhebels 7 in eine der anderen Stellungen (R), (N), (D), (3) oder (2) gesperrt - der Hebel 7 somit verriegelt ist (Verriegelungsstellung 14 des Riegelelementes 10). Hierbei ist eine in Nähe des Riegelelementes 10 angeordnete Entriegelungsfeder 17 zwischen einem fest am Gestängeende 32 sitzenden Federanschlag in Form eines Bundes 68 und einem fahrzeugfesten Federwiderlager 67 eingefedert und unter Vorspannung gehalten.

Eine Entriegelung des Handwählhebels 7 erfolgt durch Niedertreten des Bremspedales 8 um einen Differenzwinkel 51, wobei der Rollnocken 6 sich auf dem mittleren Abschnitt 46 der Eingriffsfläche 29 unter Verschwenken des Stellhebels 16 bis zum Erreichen des äußeren Abschnittes 47 der Eingriffsfläche 29 in der Pedalstellung 53 abwälzt und dadurch den Stellhebel 16 um einen Differenzwinkel 69 betätigt hat, so daß der Anlenkpunkt 72 des Stellgestänges 9 aus seiner gezeichneten Verriegelungsstellung 70 in die bei (72) angedeutete Lage einer Entriegelungsstellung 52 gewandert ist, wodurch es der Entriegelungsfeder 17 ermöglicht ist, das Riegelelement 10 in seine Freigangstellung 15 zu betätigen und dadurch den Handwählhebel 7 zu entriegeln. Wird der auf diese Weise entriegelte Handwählhebel 7 aus der (P)-Stellung in eine der Wählbereichsstellungen (R), (N), (D), (3) oder (2) betätigt, gelangen eine Steuernockenfläche 18 des Nockenscheibenteiles 34 und eine Gegensteuernockenfläche 21 am Riegelelement 10 so in Eingriff, daß das Riegelelement 10 in seine Freigangstellung 15 betätigt bleibt, so daß das angekoppelte Stellgestänge 9 den Stellhebel 16 in der Entriegelungsstellung 52 hält, in welcher die Betätigungsglieder 6 und 19 voneinander abgehoben haben, also außer Eingriff sind. Dadurch sind die aus der Betätigung der Verriegelungsvorrichtung 20 durch die Verriegelungsfeder 27 und durch die Nocken 18, 21 resultierenden Kräfte ohne Einfluß auf Bremspedal 8 und Rückholfeder 13.

In der Ruhestellung 35 und in dem sich anschließenden Schwenkwinkelbereich 30 des Bremspedales 8 sind die vom Stellhebel 16 am Rollnocken 6 ausgeübten Kräfte in ihrer Wirkung auf die Rückholfeder 13 dadurch gering gehalten, daß die entsprechenden Hebelmomente um die Schwenkachse 36-36 gegen Null ausgelegt sind, d. h., der Abschnitt 45 der Eingriffsfläche 29 verläuft in etwa tangential zu der Kreisbahn 55 des Eingriffspunktes am Rollnocken 6 um die Schwenkachse 36-36, wobei die erwähnten Kräfte dann etwa in einer die Schwenkachse 36-36 enthaltenden Ebene 35-35 wirken.

Ähnlich ist der Verlauf des äußeren Abschnittes 47 der Eingriffsfläche 29 zu der genannten Kreisbahn 55 gehalten, jedoch mit einer von der Tangentialen etwas stärkeren Abweichung derart, daß die Eingriffsglieder 6 und 19 unter Geringhaltung der resultierenden Kräfte noch mit Sicherheit in gegenseitigem Eingriff verbleiben, wenn das Bremspedal 8 über die Pedalstellung 53 hinaus niedergetreten wird.

## Patentansprüche

1. Anordnung an einem zur Betätigung der Betriebsbremsen eines Kraftfahrzeuges verwendeten Bremspedal (8) zum Entriegeln eines Hebels (7) einer Schaltvorrichtung eines Wechselgetriebes, bei der ein erstes Betätigungsglied (6) bewegungsfest an dem schwenkbar gelagerten Bremspedal (8) und ein zweites Betätigungsglied (19) bewegungsfest an einem in Nähe des Bremspedales (8) gelagerten Stellhebel (16) zum Ver- und Entriegeln einer dem Hebel (7) der Schaltvorrichtung zugeordneten Verriegelungsvorrichtung (20) angeordnet sind sowie eine an einem fahrzeugfesten Teil verankerte oder abgestützte Verriegelungsfeder (27) im Sinne einer Verriegelung in dem einen Schwenksinne bzw. ein zugehöriges Betätigungsglied (6) im Sinne einer Entriegelung in dem entgegengesetzten Schwenksinne an dem Stellhebel (16)angreift bzw. wirksam ist,
**dadurch gekennzeichnet**,
daß die beiden Betätigungsglieder (6 und 19) in Form von Nocken oder dgl. ausgebildet und unmittelbar miteinander in Eingriff bringbar sind sowie wenigstens das zweite Betätigungsglied (19) eine Eingriffsfläche (29) mit einem derartigen Verlauf aufweist, daß in einem die Ruhestellung (35) einschließenden begrenzten Schwenkwinkelbereich (30) des Bremspedales (8) die am ersten Betätigungsglied (6) des Bremspedals (8) resultierenden Kräfte wenigstens annähernd in einer die Schwenkachse (36-36) des Bremspedales (8) enthaltenden Ebene (37-37) liegen.

2. Anordnung nach Anspruch 1,
**dadurch gekennzeichnet**,
daß die Verriegelungsfeder (27) mit niedrigeren Federkräften als eine das Bremspedal (8) in Richtung seiner Ruhestellung (35) betätigende Rückholfeder (13) ausgelegt ist.

3. Anordnung nach Anspruch 1 oder 2,
**dadurch gekennzeichnet,**
daß die Verriegelungsfeder (27) mit höheren Federkräften ausgelegt ist als die im Sinne einer Entriegelung arbeitende Entriegelungsfeder (17) der Verriegelungsvorrichtung nach Patent 38 42 333 und der Verlauf der Eingriffsfläche (29) die Betätigungsglieder (6 und 19) außer Eingriff gelangen läßt, wenn das Bremspedal (8) seine Ruhestellung (35) einnimmt und die Verriegelungsvorrichtung (20) entriegelt ist.

4. Anordnung nach einem der Ansprüche 1 bis 3,
**dadurch gekennzeichnet,**
daß der Verlauf der Eingriffsfläche (29) so gestaltet ist, daß in einem sich an diejenige Pedalstellung (53) des Bremspedales (8), welche dem entriegelten Zustand (Freigangstellung 15) der Verriegelungsvorrichtung (20) entspricht, anschließenden begrenzten Schwenkwinkelbereich (54) des Bremspedales (8) die Betätigungsglieder (6 und 19) in weiterem gegenseitigen Eingriff unter Geringhaltung der am Bremspedal (8) resultierenden Hebelmomente gehalten sind.

## Claims

1. Arrangement on a brake pedal (8), used for actuating the operating brakes of a motor vehicle, for releasing a lever (7) of a shift device of a change gear, in which a first actuating member (6) is arranged fixedly in terms of movement on the pivotably mounted brake pedal (8) and a second actuating member (19) is arranged fixedly in terms of movement on an adjusting lever (16) mounted in the vicinity of the brake pedal (8), said members being for locking and releasing a locking device (20) assigned to the lever (7) of the shift device, and a locking spring (27) anchored or supported on a part fixed to the vehicle engages or is effective on the adjusting lever (16) in one pivoting direction with the effect of a locking and an associated actuating member (6) engages or is effective on the adjusting lever in the opposite pivoting direction with the effect of a release, characterised in that the two actuating members (6 and 19) are designed in the form of cams or the like and can be brought directly into engagement with one another, and at least the second actuating member (19) has an engagement surface (29) of such a shape that, in a limited pivot-angle range (30) of the brake pedal (8) including the position of rest (35), the forces resulting on the first actuating member (6) of the brake pedal (8) are at least approximately in a plane (37-37) containing the pivot axis (36-36) of the brake pedal (8).

2. Arrangement according to Claim 1, characterised in that the locking spring (27) is designed with lower spring forces than a return spring (13) actuating the brake pedal (8) in the direction of its position of rest (35).

3. Arrangement according to Claim 1 or 2, characterised in that the locking spring (27) is designed with higher spring forces than the release spring (17) working with the effect of a release and belonging to the locking device according to Patent 3,842,333, and the shape of the engagement surface (29) causes the actuating members (6 and 19) to come out of engagement when the brake pedal (8) assumes its position of rest (35) and the locking device (20) is released.

4. Arrangement according to one of Claims 1 to 3, characterised in that the shape of the engagement surface (29) is so designed that, in a limited pivot-angle range (54) of the brake pedal (8) adjacent to that pedal position (53) of the brake pedal (8) which corresponds to the released state (free position 15) of the locking device (20), the actuating members (6 and 19) are maintained in further mutual engagement, with the lever moments resulting on the brake pedal (8) being kept low.

## Revendications

1. Dispositif installé sur une pédale de frein (8) utilisée pour actionner les freins de service d'un véhicule automobile, pour déverrouiller un levier (7) d'un dispositif de changement de vitesses d'une boîte de vitesses, dans lequel un premier organe d'actionnement (6) est monté, avec blocage contre tout déplacement, sur la pédale de frein (8) montée basculante, et un second organe d'actionnement (19) est monté, avec blocage contre tout déplacement, sur un levier de réglage (16) monté à proximité de la pédale de frein (8), pour bloquer et débloquer un dispositif de verrouillage (20) associé au levier (7) du dispositif de changement de vitesses, et un ressort de blocage (27), ancré ou prenant appui sur une partie solidaire du véhicule, attaque ou agit sur le levier de réglage (16), dans le sens d'un déblocage dans un sens de pivotement, et un organe d'actionnement associé (6) attaque ou agit sur le levier de réglage (16) dans le sens d'un déblocage dans le sens de pivotement opposé, caractérisé en ce que les deux organes d'actionnement (6 et 19) sont réalisés sous la forme de cames ou analogues et peuvent être amenés à engrener directement entre eux, et au moins le second organe d'actionnement (19) possède une surface d'engrènement (22) possédant une configuration telle que dans une plage angulaire limitée de pivotement (30), incluant la position de repos (35), de la pédale de frein (8), les forces résultantes apparaissant sur le premier organe d'actionnement (6) de la pédale de frein (8) soient situées au moins approximativement dans un plan (37-37), qui contient l'axe de pivotement (36-36) de la pédale de frein (8).

2. Dispositif selon la revendication 1, caractérisé en ce que le ressort de blocage (27) est conçu de manière à produire des forces élastiques inférieures à celles d'un ressort de rappel (13) actionnant la pédale de frein (8) en direction de sa position de repos (35).

3. Dispositif selon la revendication 1 ou 2, caractérisé en ce que le ressort de blocage (27) est conçu de manière à produire des forces élastiques supérieures à celles du ressort de déblocage (17), qui travaille dans le sens d'un déblocage, du dispositif de verrouillage conformément au brevet 38 42 333, et la configuration de la surface d'engrènement (29) amène les organes d'actionnement (6 et 19) à se dégager l'un de l'autre lorsque la pédale de frein (8) atteint sa position de repos (35) et que le dispositif de verrouillage (20) est débloqué.

4. Dispositif selon l'une des revendications 1 à 3, caractérisé en ce que la configuration de la surface d'engrènement (29) est agencée de telle sorte que dans une plage angulaire limitée de pivotement (54) de la pédale de frein (8), qui se raccorde à la position (53) de la pédale de frein (8), qui correspond à l'état débloqué (position d'actionnement libre (15) du dispositif de verrouillage (20), les organes d'actionnement (6 et 19) continuent à être maintenus dans un état d'engrènement réciproque moyennant le maintien à une faible valeur des moments de levier qui sont appliqués à la pédale de frein (8).
